Europäisches Patentamt

(19) **European Patent Office**

**Office européen des brevets**

(11) Publication number: **0 099 728**
**A2**

(12) # EUROPEAN PATENT APPLICATION

(21) Application number: **83304075.1**

(22) Date of filing: **13.07.83**

(51) Int. Cl.³: **B 60 N 1/08**

(30) Priority: **15.07.82 GB 8220549**

(43) Date of publication of application:
**01.02.84 Bulletin 84/5**

(84) Designated Contracting States:
**DE FR GB IT SE**

(71) Applicant: **TI COX LIMITED**
**177 Lenton Boulevard**
**Nottingham NG7 2DD(GB)**

(72) Inventor: **Babbs, Frederick William**
**Mountfield 102A, Cropwell Road**
**Radcliffe on Trent Nottingham(GB)**

(74) Representative: **Arthur, George Fitzgerald et al,**
**KILBURN & STRODE 30, John Street**
**London WC1N 2DD(GB)**

(54) **Vehicle seat slide.**

(57) A pair of elongate telescoping slides for a seat mounting in a vehicle comprise an outer channel with a base (31) and sides (32) which turn over at the top (at 33) and an inner inverted 'T' slide (22) the lower edges of which turn out and up to terminate in edges (36) closely spaced from the internal curve of the outer flanges (33). Ball bearings are included between the turned out and up parts of the inner flange, and the outer face of the turn-over portion 33 of the outer flange and load carrying rollers (37) run in races defined respectively by the outer side of the turn out and up lower edge of the web (22) and internal grooves (29) in the base of the channel.

The slides tend to be rattle free when unloaded, relatively easy to adjust under the load of a person sitting in the seat, and resistant to excessive deformation under excessive loads while yet they can be made with a minimum of material.

.1.

## VEHICLE SEAT SLIDE

—

This invention relates to a slide for a vehicle seat, and one object is to provide such a slide which is capable of a wide range of adjustment, but which yet can be very strong even when made of thin material.

According to one aspect of the present invention a slide for a vehicle seat comprises two relatively slidable elongate members, the outer of which has a channel-like cross-section, with a base and two sides which have first flanges which bend over and in and back towards the base; and the inner of which has a web between the first flanges which web bends at each side out from the web and back away from the said base as one of a pair of second flanges in interlocking but spaced relationship with the first flanges; and ball bearings between the respective pairs of first and second flanges.

The interlocking relationship between the flanges on the inner and outer slidable members gives good strength between the slides, even under impact loads, because slight deformation can cause the slides to come into contact with each other along the full extent of their overlapping length to resist further deformation. Nevertheless the arrangement of one member as a web between the first flanges, bending out to form the second flanges, makes for a compact design using a minimum of material and therefore being of minimum weight.

The positioning of the balls between the flanges allows easy sliding if the fore-and-aft position of the seat is to be adjusted.

Preferably the positioning of the balls causes the first and/or the second flanges to be slightly deformed so that the slides will be preloaded and will not tend to rattle when no one is sitting on the seat. The amount of preloading can be such that it is substantially taken up when someone is sitting on the seat, so that there is little resistance against sliding.

Preferably the balls are in the inside of the bend of the second flanges on the inner member for most efficient use of the space. The balls may act on the insides of the bends of the first flanges, but preferably act on the outsides of those bends with even more economony of material.

The outsides of the bends of the second flanges on the inner slidable member conveniently defines with the base on the outer slidable member a race for one or more load carrying rollers which indeed may be grooved to conform with the shape of the outside of the bend in the second flanges. The base may then be formed with elongate curved ridges co-operating with the grooves in the rollers.

If vertical loads are taken by such rollers then the balls may have to take little or no vertical load, and can conveniently be arranged so that the line of reaction through a ball between a first flange and a second flange is at an angle of perhaps $40^{\circ}$ or $45^{\circ}$ to the vertical to provide a self-centering action between the two

—

slidable members.

According to a second aspect of the invention, a slide for a vehicle seat comprises a web having first and second sliding edges, a fore-and-aft slide mounted in sliding relation to one edge, and a curved slide mounted in sliding relation to the other edge, whereby when the slides are fastened one to the seat, and the other to the vehicle, the fore-and-aft position of the seat and the inclination of the seat can be adjusted independently by sliding between the web and the respective slides.

The web itself can be provided with means for locking each of the slides in a selected position, and conveniently is one of a pair of webs, one at each side of a seat mounting with a common release device for each of the slides; the two webs with their interconnecting members will then constitute a form of carriage which is slidable in a fore-and-aft direction in relation to the vehicle, and on which the seat can be slid around the curved slides to adjust the angle of inclination and indeed the height of the seat.

Each of the slides can be a slide as defined in accordance with the first aspect of this invention.

The invention may be carried into practice in various ways, and one embodiment will now be described by way of example with reference to the accompanying drawings; in which

FIGURE 1 is a side elevation of a car seat mounting;

FIGURE 2 is a view of one side of the mounting of FIGURE 1 as seen from the front; and

FIGURE 3 is a detail to an increased scale of the form of the slides.

The mounting is designed to enable the position of the seat in relation to the car, to be adjusted in a fore-and-aft direction to suit the convenience of the sitter, and also to enable the tilt angle of the seat to be adjusted.

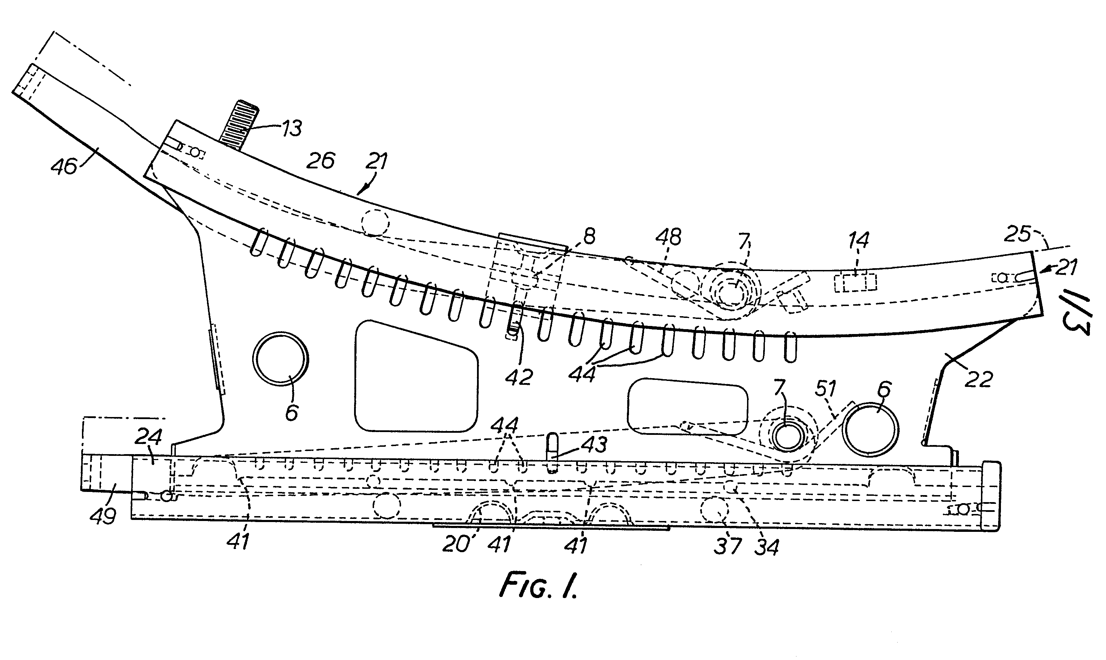

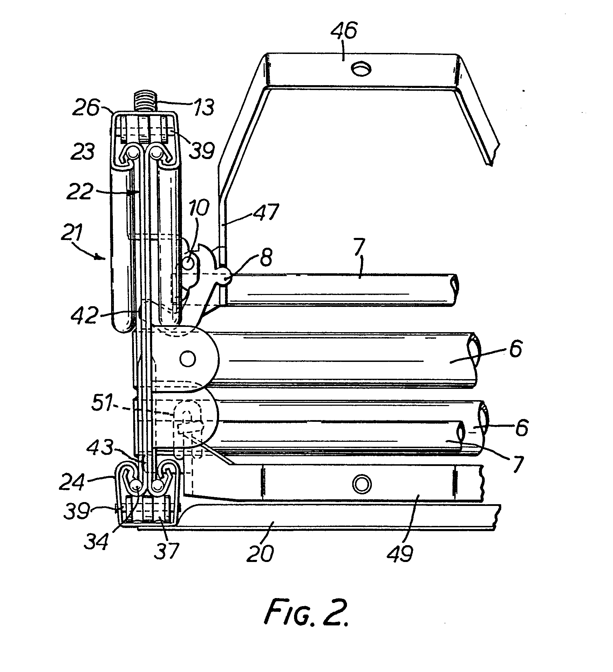

The mounting comprises two side mounting assemblies indicated generally at 21 in FIGURES 1 and 2, which assemblies 21 are laterally located in side-by-side relation underneath the respective sides of the seat by an alignment plate 20, and by their connection to the floor of the car. The assemblies 21 are also interconnected by two brace tubes 6 and two torque tubes 7.

Each assembly 21 comprises a web 22 having at its upper and lower edges, an inner slide member 23 which will be described in more detail below, and which can slide in a fore-and-aft direction in a straight outer channel 24 on the floor of the vehicle, and can slide in an upwardly concave curve 25 at the upper edge in relation to a curved

—

outer slide channel 26.

The seat (not shown) is secured to the two upper curved outer channels 26 by fastenings 13 and 14 at the front and rear of the two slides, one at each side of the seat.

Thus, the fore-and-aft position of the seat can be adjusted by sliding the webs 22 and the upper outer channels 26 and the seat in relation to the lower straight fixed outer channels 24, whereas the angle of inclination of the seat can be adjusted by sliding the seat with the two upper outer channels 26 in relation to the upper edges of the webs 22 around the curve 25.

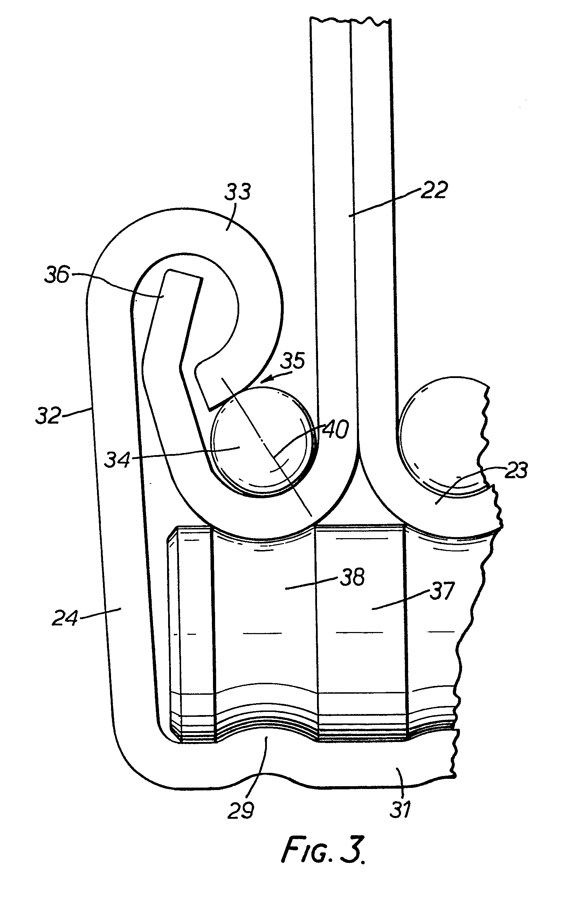

The arrangement of the co-operating channels 23 and 24 at the upper and lower edges of the web 22 are the same, except that the upper channels are curved, whereas the lower channels are straight. The cross section is shown to an increased scale in FIGURE 3, where it can be seen that the outer channel 24 has a bottom horizontal portion 31 for bolting to the floor of a car, and two upwardly extending sides 32 which are curved over at their upper edges at 33 through an angle of about 250°. The web 22 curves outwardly round at the bottom at each side through an angle of nearly 180° to define a race for ball bearings 34 which also bear against the turned over portion 33 of the outer channel, as shown at 35. Then the edge of the web flange 36 bends back towards the web 22 within the turned-over portion 33 of the outer channel.

Steel or plastics rollers 37 can run about horizontal axes between the upper surface of the bottom 31 and the lower surfaces of the outwardly turned portions 23 of the flanges 22. It will be appreciated that there are two webs 22 spot welded together, and each is turned outwards at its upper and lower edges to define the inner channels 23. Each roller 37 is formed with a pair of external grooves 38, which can run around the outer curve of the turned-over portions 23 and also can run over indentations 29 running along the length of the bottom portion 31 of the outer channel.

The turned-over portions 23 and 33 are slightly stressed so that the slide is free from rattle when unloaded, although there is a tendency when someone is sitting in the seat for the stress to le relieved so that there will be very little resistance to easy sliding when the position of the seat is to be adjusted.

If an impact load is experienced, perhaps in a car crash, after a little deformation of the components, the edges 36 of the inner flanges will come into contact with the insides of the urned-over portions 33 of the outer channels along the whole length of the channels, so that there will be a large surface area resisting further deformation, and holding the seat to the floor of the car.

The positions of the rollers 37 may be retained by cages indicated at 39 in FIGURE 2.

Manufacture of the channel members is much as

—

difficult  as might be expected. The webs 22 are pressed out from sheet steel to  shape, and then their upper and lower edges are turned over, as indicated at 22 using an appropriate forming tool.  The outer channels are formed with the bottom 31 and side walls 32 flat until the outer edges corresponding to the parts 33 are turned over, and then the side walls 32 are bent up to the final position, and finally the channel is curved according to the arc 25 with an internal tool included between the sides 32 to stop them collapsing towards each other during formation of the curve. The balls and rollers are fitted in position, and the relatively slidable channels are slid together. The channels are formed with local indentations indicated at 41 in FIGURE 1 to define end stops for the balls  limiting the amount of sliding movement.

Once a desired position of adjustment has been obtained, it is retained by means of a locking tongue shown at 42 in FIGURE 2 for the upper slide, and at 43 for the lower slide.  Each tongue engages between one of a number of slots 44 formed in the upper and lower edges of the webs 22, and a corresponding slot formed in the side wall of the outer channels 26 in a manner well understood in itself.

The upper tongue 42 is arranged to pivot about a roll pin shown at 10 in FIGURE 2, by operation of a lock handle 46 which extends underneath the front of the seat, and has a pair of rearwardly directed arms 47 pivotally mounted on the outer channel at 7, and co-operating with a detent 8 on the tongue 42 so that when the handle 46 is lifted, the tongue 42 is pivoted anti-clockwise in FIGURE 2 about the axis 10 to disengage the tongue from the corresponding slots, and allow relative sliding to take place. The tongues 42 on the assemblies 21 at each side of the seat are released and reinserted together by operation of the common handle 46. A spring 48 normally holds the tongue 42 in engagement with the slots 44.

There is a similar release handle 49 at the bottom of the front of the mounting for releasing the lower tongue 43 to permit fore-and-aft sliding. That too is pivoted on one of the torque tubes 7, and is biased by a spring 51 to be normally in engagement.

By virtue of the design of the inner and outer slide channels shown in detail in FIGURE 3, it is possible to have a sufficiently strong mounting without having to have for the webs and channels, as much steel as would otherwise be necessary, and it has been found in practice possible with this design to have a 20% (percent) saving in weight of the complete seat mounting.

FIGURE 3 shows that the line 40 of the reaction between the turned-over edge of the outer channel and the turned-out edge of the inner web is at an angle of perhaps $40^{\circ}$ or $45^{\circ}$ to the vertical so that the net effect of the two balls 34 on each side of the web is to produce self-centering. The main vertical load is carried by the rollers 37
which are themselves self tracking by virtue of the
grooves 38 .

## CLAIMS

1.    A slide for a vehicle seat comprising two relatively slidable elongate members, the outer of which (24) has a channel-like cross-section, with a base (31) and two sides which have first flanges (32) which bend over ( at 33) and in and back towards the base; and the inner of which has a web (22) between the first flanges which web bends at each side out from the web and back away from the said base as one of a pair of second flanges (36) in interlocking but spaced relationship with the first flanges; and ball bearings (34) between the respective pairs of first and second flanges.

2.    A slide as claimed in Claim 1 in which the first and/or the second flanges are deformed in the sense to be urged towards each other on either side of the ball bearings.

3.    A slide as claimed in Claim 2 in which when an individual is sitting on a vehicle seat mounted on the slide, his weight will reduce the deformation and the preloading on the ball bearings.

4.    A slide as claimed in any of the preceding claims in which the bends of the second flanges extend through nearly $180^{o}$ to define ( with slight clearance) races for the ball bearings.

5.    A slide as claimed in any of the preceding claims in which the ball bearings act on the portions of the first flanges past the bends around the edges of the second flanges.

0099728

.11.

6. A slide as claimed in Claim 5 in which under load the edges of the first flanges can be urged by reaction of the ball bearings towards contact with the second flanges.

7. A slide as claimed in any of the preceding claims in which the outsides of the bends of the second flanges define with indentations (29) in the base races for load carrying roller means (37)

8. A slide as claimed in any of the preceding claims in which the line (40) of the reaction through the ball bearings between the first and second flanges is about $40^{\circ}$ or $45^{\circ}$ to the vertical.

9. A slide as claimed in any of the preceding claims having a single web and two relatively slidable elongate members at opposite edges of the wedge whereby one of the pairs of slidable members can be used for adjusting the fore-and-aft position of a seat in relation to a vehicle, and relative sliding between the other pair of elongate members which extend in a circular arc as seen from the side, can adjust the inclination of the seat in relation to the vehicle.

10. A method of manufacturing a slide for a vehicle seat, as claimed in any of the preceding claims in which the outer channel member is formed from the flat by turning up the outer edges, and the edges of the first flanges are turned further over while an internal tool is positioned between the sides near the base to stop them collapsing towards

.12.

.'each other, the second flanges are formed by turning
over the edges of the web portion and the two separately
formed members are slid together while the ball
bearings and rollers are fitted between them.

5.

1/3

FIG. I.

FIG. 2.

3/3

0099728

Fig. 3.